# FASCICULE DE BREVET EUROPEEN

(11) **EP 0 518 777 B1**
(45) Date de publication et mention de la délivrance du brevet: **16.10.1996**
(21) Numéro de dépôt: 92401634.8
(22) Date de dépôt: 12.06.1992
(51) Int. Cl.: C04B 28/04, C04B 18/04, C04B 18/14

(54) **Mortier à très haute performance, bétons obtenus à partir de ce mortier et les éléments fabriqués avec ce mortier ou ce béton**
Hochleistungsmörtel, daraus erhaltene Betone und aus diesem Mörtel oder Beton hergestellte Elemente
High-performance mortar, concretes obtained from this mortar and the elements produced from this mortar or concrete

(30) Priorité: 12.06.1991 FR 9107145
(43) Date de publication de la demande: 16.12.1992
(73) Titulaire: BOUYGUES, F-78061 Saint-Quentin en Yvelines Cedex (FR)
(72) Inventeur: Richard, Pierre, F-92200 Neuilly sur Seine (FR); Cheyrezy, Marcel, F-92310 Sèvres (FR); Dugat, Jérôme, F-78180 Montigny le Bretonneux (FR)
(74) Mandataire: Schrimpf, Robert

(56) Documents cités:
- WO-A-85/00359
- PATENT ABSTRACTS OF JAPAN vol. 14, no. 390 (C-751)23 Août 1990
- JAPANESE PATENTS GAZETTE Week 29, Derwent Publications Ltd., London, GB; AN 86- 185369
- CHEMICAL ABSTRACTS, vol. 107, no. 4, 27 Juillet 1987, Columbus, Ohio, US; abstract no. 27525Q, DENKI KAGAKU KKK: 'MANUFACTURE OF HIGH-STRENGTH CEMENT PRODUCTS' page 264 ;

## Description

La présente invention concerne un mortier à très haute performance et les bétons à très haute performance que l'on peut obtenir à partir de ce mortier, l'expression'très haute performance" signifiant que ce mortier a une résistance à la compression au moins de l'ordre de 250 MPa.

Il est connu que l'introduction de silice dans une composition de mortier ou de béton présente certains avantages et l'on sait que la silice est disponible comme sous-produit de l'industrie du silicium, de ferro-silicium, de la zircone ou similaire (JP-A-21445417)

On sait que l'introduction de farine de silice dans une composition d'un produit à base de ciment permet d'améliorer la résistance à la compression et, par exemple, d'obtenir une résistance à 28 jours de l'ordre de 112 MPa (Chemical Abstracts, Vol 107, n° 4, abstract n° 27525Q).

On sait qu'une très haute résistance à la compression, de l'ordre de 120 à 140 MPa à 28 jours peut être obtenu avec les compositions suivantes :

| | Mortier (Cure à 20°C) | Béton (Cure à 20°C) |
|---|---|---|
| . Ciment Portland à faible teneur en C₃A | 600 kg | 475 kg |
| . Fumée de silice de Si ou de FeSi | 60 kg | 45 kg |
| . Sable de quartz 0/5.mm | 1 633 kg | 1 000 kg |
| . Superplastifiant (extrait sec) | 7 kg | 5 kg |
| . Granulat basalte | 0 kg | 819 kg |
| . Eau | 200 kg | 156 kg |
| | | |
| TOTAL | 2 500 kg | 2 500 kg |
| | | |
| . Rapport eau/(ciment+micro-silice) | 0,303 | 0,300 |
| . Résistance à la compression | 140 MPa | 120 MPa |

Ces performances ont été considérées comme étant pratiquement des limites lorsqu'on utilise les matières premières normalement disponibles.

La présente invention vise à fournir des mortiers et des bétons présentant des performances très supérieures, soit typiquement une résistance à la compression (à 28 jours) d'au moins environ 250 MPa.

On y parvient, selon la présente invention par le fait que le mortier comprend les constituants suivants, dans les proportions indiquées, à malaxer avec de l'eau pour obtenir la fluidification du mélange :
a - un ciment Portland choisi dans le groupe constitué par les ciments Portland ordinaires dits "CPA", les ciments Portland à haute performance dits "CPA-HP", les ciments Portland à haute performance et à prise rapide dits "CPA-HPR" et les ciments Portland à faible teneur en aluminate tricalcique (C₃A), de type normal ou à haute performance ou à haute performance et à prise rapide ;
b - une microsilice vitreuse d'une grosseur de grains en majeure partie comprise dans la gamme 100 Å-0,5 micron, obtenue comme sous-produit dans l'industrie du zirconium, la proportion de cette silice étant de 10 à 30 % en poids du poids du ciment ;
c - un agent super-plastifiant réducteur d'eau et/ou un agent fluidifiant en proportion globale de 0,3 % à 3 % (poids de l'extrait sec par rapport au poids de ciment) ;
d - un sable de carrière constitué de grains de quartz qui ont en majeure partie un diamètre compris dans la gamme 0,08 mm - 1,0 mm ;
e - éventuellement d'autres adjuvants.

Le mélange pour ciment de l'invention peut encore présenter une ou plusieurs des caractéristiques suivantes :
- la microsilice est dosée à raison de 20-26 % environ du poids de ciment, de préférence 24-26 %.
- l'agent fluidifiant et/ou superplastifiant comporte, dans sa composition, un formaldéhyde sulfonate naphtalène et/ou un formaldéhyde sulfonate mélamine,
- le dosage en extrait sec de l'agent fluidifiant et/ou super-plastifiant est d'au moins 0,6 % du poids du ciment,
- le sable de carrière est constitué de grains de quartz ayant en majeure partie un diamètre compris dans la gamme 0,125 mm - 0,5 mm,
- le sable est dosé à 80-140 %, de préférence environ 110 %, du poids du ciment.

Le "diamètre" d'un grain désigne le diamètre de la sphère dont le volume est le plus proche du volume réel du grain.

L'expression "en majeure partie" est utilisée pour signifier qu'au moins 50 %, de préférence au moins 70 % ou encore mieux au moins 80 % des grains présentent la caractéristique indiquée.

La quantité d'eau utilisée pour malaxer le mélange est comprise entre 9,5-16 %, de préférence entre 11 et 12,5 % de la somme des poids du ciment et de la microsilice de zircone.

La quantité d'eau utilisée pour obtenir la fluidification du mélange sec est remarquablement inférieure aux quantités d'eau normalement utilisées et les résistances de 250 MPa que l'on obtient selon l'invention sont largement dues à cette réduction exceptionnelle.

Si l'on considère le pourcentage P_{c} de la quantité d'eau par rapport à la somme des poids de ciment et de microsilice, on sait, en effet, que ce pourcentage est compris dans la gamme 1,0-0,45 pour les bétons traditionnels, qu'il est voisin de 0,35 pour les bétons à haute performance et qu'il est voisin de 0,27 pour les bétons à très haute performance, alors qu'il est compris dans la gamme 0.12-0.095 pour les bétons et mortiers de la présente invention.

Les meilleurs résultats obtenus à ce jour pour des mortiers autres que celui selon l'invention ont été de 0,18 à 0,14 pour les pâtes malaxées de façon traditionnelle et de 0,15 à 0,12 pour les pâtes extrudées ou laminées.

On pense que cette possibilité d'une réduction considérable de la quantité d'eau est essentiellement due au choix particulier de la microsilice, en combinaison avec le choix du ciment.

On constate en effet que l'on n'obtient pas ces résultats exceptionnels lorsqu'on utilise les silices obtenues comme sous-produit dans l'industrie du silicium et l'on constate également que l'on n'obtient pas ces résultats remarquables lorsqu'on utilise un ciment autre que les ciments indiqués, par exemple un ciment alumineux.

On pense que le choix de la granulométrie du sable de quartz est aussi un paramètre important.

Le béton de l'invention est obtenu à partir d'un mortier selon l'invention auquel on a ajouté un granulat du commerce obtenu par broyage d'une ou plusieurs des roches dures telles que la quartzite, le granit, le basalte, la dolomie, le calcaire, la bauxite naturelle ou calcinée, la diabase, etc...

De préférence, la taille des granulats est comprise entre 0 et 30 mm et, encore mieux, inférieure à 15 mm.

Le mortier et le béton de l'invention subissent de préférence une cure thermique.

Cette cure, qui peut être réalisée pendant la prise ou après la prise, est, de préférence, obtenue par chauffage à une température de 50° à 70° C pendant plusieurs jours.

De façon générale, on peut utiliser un chauffage compris entre 40 et 100°C pendant une période de un à sept jours.

En variante, on peut utiliser, pour la cure thermique, la chaleur dégagée par l'hydratation du ciment, si l'on utilise un moule calorifugé.

On décrira ci-après un exemple d'un mortier et un exemple d'un béton selon l'invention dans lesquels la micro-silice utilisée a été obtenue comme sous-produit lors de la réduction du silicate de zirconium en zircone, comparés à des compositions dans lesquelles la micro-silice utilisée provient de l'industrie du silicium.

### EXEMPLE 1.

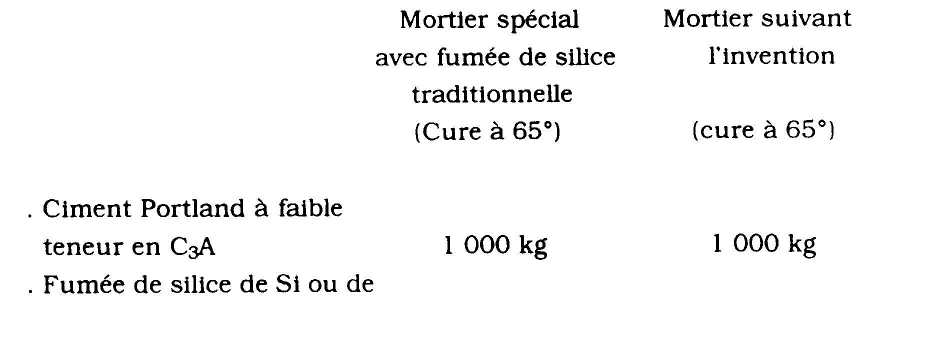

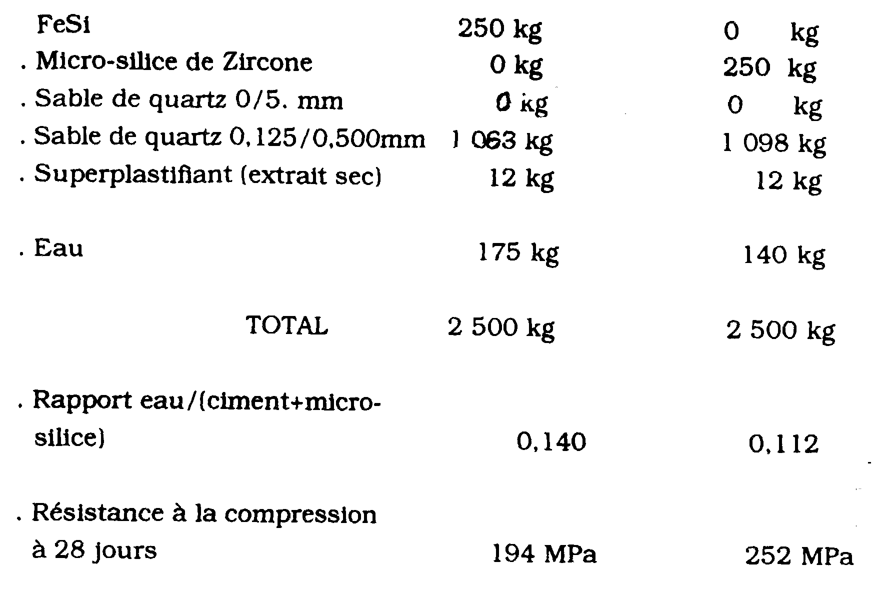

### EXEMPLE 2.

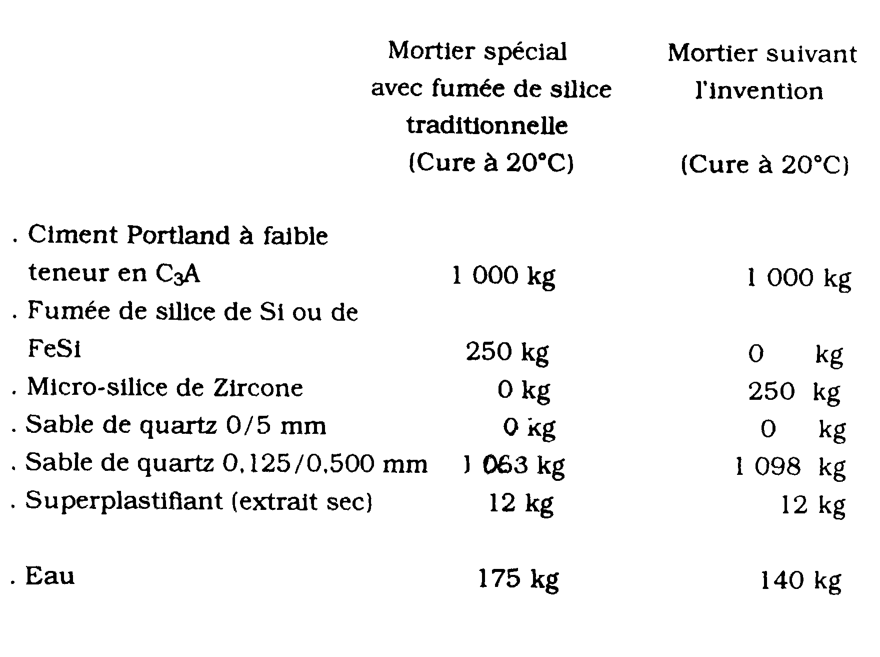

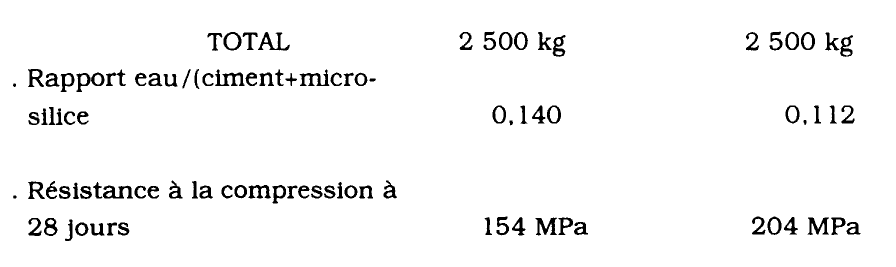

### EXEMPLE 3.

| | Béton spécial avec fumée de silice traditionnelle (Cure à 65°) | Béton suivant l'invention (Cure à 65°) |
|---|---|---|
| . Ciment Portland à faible teneur en C₃A | 715 kg | 715 kg |
| . Fumée de silice de Si ou de FeSi | 178 kg | 0 kg |
| . Micro-silice de Zircone | 0 kg | 178 kg |
| . Sable de quartz 0/5.mm | 0 kg | 0 kg |
| . Sable de quartz 0,125/0,500 mm | 768 kg | 785 kg |
| . Superplastifiant (extrait sec) | 9 kg | 9 kg |
| . Granulat Basalte | 687 kg | 703 kg |
| | | |
| . Eau | 143 kg | 110 kg |
| TOTAL | 2 500 kg | 2 500 kg |
| | | |
| . Rapport eau/(ciment+micro-silice) | 0,160 | 0,123 |
| | | |
| . Résistance à la compression à 28 jours | 162 MPa | 205 MPa |

Dans les exemples qui précèdent, le qualificatif "spécial" signifie que la composition concernée n'est pas classique mais permet d'apprécier l'importance du choix de la silice.

## Revendications

1. Mortier à très haute performance, caractérisé par le fait qu'il comprend les constituants suivants dans les proportions indiquées, à malaxer avec de l'eau pour obtenir la fluidification du mélange :
a - un ciment Portland choisi dans le groupe constitué par les ciments Portland ordinaires dits "CPA", les ciments Portland à haute performance dits "CPA-HP", les ciments Portland à haute performance et à prise rapide dits "CPA-HPR" et les ciments Portland à faible teneur en aluminate tricalcique (C₃A), de type normal ou à haute performance et à prise rapide ;
b - une microsilice vitreuse dont les grains ont en majeure partie un diamètre compris dans la gamme 100 Å-0,5 micron, obtenue comme sous-produit dans l'industrie du zyrconium, la proportion de cette silice étant de 10 à 30 % en poids du poids du ciment ;
c - un agent super plastifiant réducteur d'eau et/ou un agent fluidifiant en proportion globale de 0,3 % à 3 % (poids de l'extrait sec par rapport au poids de ciment) ;
d - un sable de carrière constitué de grains de quartz qui ont en majeure partie un diamètre compris dans la gamme 0,08 mm - 1,0 mm ;
e - éventuellement d'autres adjuvants.

2. Mortier selon la revendication 1, caractérisé en ce que la microsilice est dosée à raison de 20 - 26 % du poids de ciment.

3. Mortier selon la revendication 1 ou 2, caractérisé en ce que l'agent fluidifiant et/ou super-plastifiant comporte, dans sa composition, un formaldéhyde sulfonate naphtalène et/ou un formaldéhyde sulfonate mélamine.

4. Mortier selon l'une des revendications précédentes, caractérisé en ce que le dosage en extrait sec de l'agent fluidifiant et/ou superplastifiant est d'au moins 0,6 % du poids du ciment.

5. Mortier selon l'une des revendications précédentes, caractérisé en ce que le sable de carrière est constitué de grains de quartz qui ont en majeure partie un diamètre compris dans la gamme 0,125 mm - 0,5 mm.

6. Mortier selon l'une des revendications précédentes, caractérisé en ce que le sable est dosé à 80-140 %, de préférence environ 110 %, du poids de ciment.

7. Mortier selon l'une des revendications précédentes, caractérisé en ce que la quantité d'eau utilisée pour malaxer le mélange est comprise entre 9,5 - 16 %, de préférence entre 11 % et 12,5 % de la somme des poids du ciment et de la microsilice.

8. Mortier obtenu par malaxage d'une composition selon l'une des revendications 1 à 7, caractérisé en ce que la composition malaxée a été soumise à une cure thermique.

9. Béton obtenu à partir d'un mortier selon l'une des revendications 1 à 7, auquel on a ajouté un granulat obtenu par broyage d'une roche dure.

10. Béton selon la revendication 9, caractérisé en ce que les granulats comprennent des granulats d'un ou plusieurs des matériaux suivants : quartzite, granit, basalte, dolomie, calcaire. bauxite naturelle ou calcinée, diabase.

11. Béton selon la revendication 9 ou 10, caractérisé en ce que les granulats ont en majeure partie un diamètre inférieur à 30 mm, de préférence inférieure à 15 mm.

12. Béton selon la revendication 9 ou 11, caractérisé en ce qu'il a été soumis à une cure thermique.

13. Les éléments en mortier ou en béton, dont le mortier est un mortier selon l'une des revendications 1 à 8 et/ou dont le béton est un béton selon l'une des revendications 9 à 12.

## Patentansprüche

1. Hochleistungsmörtel, dadurch gekennzeichnet, daß er die folgenden Bestandteile in den angegebenen Mengenverhältnissen enthält, zum Kneten mit Wasser, um eine Verflüsssigung der Mischung zu erhalten:
a. ein Portland-Zement, ausgewählt aus der aus gewöhnlichen, sogenannten CPA-Portland-Zementen, den Hochleistungs- oder CPA-HP genannten Portland-Zementen, den schnell abbindenden Hochleistungs-Portland-Zementen, genannt CPA-HPR, und Portland-Zementen vom einfachen oder vom schnell abbindenden Hochleistungstyp mit geringem Gehalt an Tricalciumaluminat (C₃A) bestehenden Gruppe;
b. ein glasartiges Mikrosiliziumdioxid, dessen Körner einen Hauptanteil mit einem Durchmesser im Bereich von 100 Å-0,5 Mikrometer aufweisen, erhalten als Nebenprodukt der Zirkoniumindustrie, wobei der Anteil dieses Siliziumdioxids 10-30 Gew.-% des Gewichts des Zements beträgt;
c. ein wasserreduzierendes Superplastifiziermittel und/oder ein Fluidisierungsmittel mit einem Gesamtanteil von 0,3-3 % (Gewicht des Trockenanteils bezgl. des Gewichts an Zement);
d. Steinbruchsand, bestehend aus Quarzkörnern, welche hauptsächlich einen Durchmesser im Bereich von 0,08 mm - 1,0 mm aufweisen;
e. gegebenenfalls andere Hilfsstoffe.

2. Mörtel gemäß Anspruch 1, dadurch gekennzeichnet, daß das Mikrosiliziumdioxid in der Menge von 20 - 26 % des Gewichts an Zement dosiert ist.

3. Mörtel nach Anspruch 1 oder 2, dadurch gekennzeichnet, daß das Fluidisierungsmittel und/oder das Superplastifiziermittel in ihrer Zusammensetzung ein Formaldehyd-Naphthalinsulfonat und/oder ein Formaldehyd-Melaminsulfonat umfassen.

4. Mörtel nach einem der voranstehenden Ansprüche, dadurch gekennzeichnet, daß die Dosierung im Trockengehalt des Fluidisierungsmittels und/oder des Superplastifiziermittels mindestens 0,6 % des Gewichts an Zement beträgt.

5. Mörtel nach einem der voranstehenen Ansprüche, dadurch gekennzeichnet, daß der Steinbruchsand aus Quarzkörnern besteht, welche hauptsächlich einen Durchmesser im Bereich von 0,125 mm - 0,5 mm aufweisen.

6. Mörtel nach einem der voranstehenen Ansprüche, dadurch gekennzeichnet, daß der Sand mit 80-140 %, vorzugsweise ungefähr 110 % des Gewichts an Zement dosiert ist.

7. Mörtel nach einem der voranstehenen Ansprüche, dadurch gekennzeichnet, daß die Menge an verwendetem Wasser zum Kneten der Mischung zwischen 9,5 - 16 %, vorzugsweise zwischen 11 und 12,5 % der Summe der Gewichtsanteile von Zement und Mikrosiliziumdioxid beträgt.

8. Mörtel, erhalten durch Kneten einer Zusammensetzung gemäß einem der Ansprüch 1-7, dadurch gekennzeichnet, daß die geknetete Zusammensetzung einer thermischen Aushärtung unterzogen wurde.

9. Beton, erhalten ausgehend von dem Mörtel gemäß einem der Ansprüche 1-7, zu welchem man ein Granulat zugegeben hat, welches durch Zerkleinern von hartem Gestein erhalten wurde.

10. Beton nach Anspruch 9, dadurch gekennzeichnet, daß die Granulate eines oder mehrere der Granulate der folgenden Materialien umfassen: Quarzit, Granit, Basalt, Dolomit, Kalk, kalzinierter oder natürlicher Bauxit, Diabas.

11. Beton nach Anspruch 9 oder 10, dadurch gekennzeichnet, daß die Granulate hauptsächlich einen Durchmesser kleiner als 30 mm, vorzugsweise kleiner als 15 mm aufweisen.

12. Beton nach Anspruch 9 oder 11, dadurch gekennzeichnet, daß er einer thermischen Aushärtung unterzogen wurde.

13. Elemente aus Mörtel oder aus Beton, bei denen der Mörtel ein Mörtel gemäß einem der Ansprüche 1 bis 8 und/oder bei denen der Beton ein Beton gemäß einem der Ansprüche 9 bis 12 ist.

## Claims

1. Very high performance mortar, characterized in that it comprises the following constituents in the proportions indicated, to be mixed with water to obtain the fluidification of the mixture:
a - a Portland cement chosen from among the group constituted by the usual so-called "CPA" Portland cements, the so-called "CPA-HP" high performance Portland cements, the so-called "CPA-HPR" high performance and quick-setting Portland cements and the normal or high performance and quick-setting Portland cements with a low tricalcium aluminate (C₃A) content;
b - a vitreous microsilica, the grains of which have for the most part a diameter within the range 100 Å-0.5 micron, obtainedasaby-product in the zirconium industry, the proportion of this silica being from 10 to 30% by weight of the weight of the cement;
c - a water-reducing superplasticizer and/or a liquefying agent with an overall proportion of 0.3% to 3% (weight of the dry extract with respect to the cement weight);
d - a quarry sand constituted by quartz grains which have for the most part a diameter within the range 0.08 mm - 1.0 mm;
e - optionally other admixtures.

2. Mortar according to Claim 1, characterized in that the microsilica is measured out in a proportion of 20-26% of the cement weight.

3. Mortar according to Claim 1 or 2, characterized in that the liquefying agent and/or superplasticizer comprises, in its composition, a naphthalene sulphonate formaldehyde and/or a melamine sulphonate formaldehyde.

4. Mortar according to one of the preceding claims, characterized in that the proportion of dry extract in the liquefying agent and/or superplasticizer is of at least 0.6% of the cement weight.

5. Mortar according to one of the preceding claims, characterized in that the quarry sand is constituted by quartz grains which have for the most part a diameter within the range 0.125 mm - 0.5 mm.

6. Mortar according to one of the preceding claims, characterized in that the sand is measured out at 80-140%, preferably about 110%, of the cement weight.

7. Mortar according to one of the preceding claims, characterized in that the amount of water used to mix the mixture is between 9.5-16%, preferably between 11% and 12.5% of the sum of the cement and microsilica weights.

8. Mortar obtained by mixing of a composition according to one of Claims 1 to 7, characterized in that the mixed composition has been subjected to a thermal curing operation.

9. Concrete obtained from a mortar according to one of Claims 1 to 7, to which an aggregate obtained by milling of hard rock has been added.

10. Concrete according to Claim 9, characterized in that the aggregates contain aggregates of one or more of the following materials: quartzite, granite, basalt, dolomite, limestone, natural or calcined bauxite, diabase.

11. Concrete according to Claim 9 or 10, characterized in that the aggregates have for the most part a diameter smaller than 30 mm, preferably smaller than 15 mm.

12. Concrete according to Claim 9 or 11, characterized in that it has been subjected to a thermal curing operation.

13. Elements made of mortar or concrete, the mortar of which is a mortar according to one of Claims 1 to 8 and/or the concrete of which is a concrete according to one of Claims 9 to 12.
